# FASCICULE DE BREVET EUROPEEN

(11) **EP 2 828 130 B1**
(45) Date de publication et mention de la délivrance du brevet: **16.03.2016**
(21) Numéro de dépôt: 13710847.8
(22) Date de dépôt: 19.03.2013
(51) Int. Cl.: B60S 1/08, H02P 7/29

(54) **PROCÉDÉ ET DISPOSITIF DE COMMANDE D'UN MOTEUR D'ESSUIE-GLACES DE VÉHICULE AUTOMOBILE**
VERFAHREN UND VORRICHTUNG ZUR STEUERUNG EINES KRAFTFAHRZEUG-SCHEIBENWISCHERMOTORS
METHOD AND DEVICE FOR CONTROLLING A MOTOR VEHICLE WINDSCREEN WIPER MOTOR

(30) Priorité: 21.03.2012 FR 1200845
(43) Date de publication de la demande: 28.01.2015
(73) Titulaire: Valeo Systèmes d'Essuyage, 78321 Le Mesnil Saint Denis (FR)
(72) Inventeur: CAILLAUD, Dominique, 86100 Chatellerault (FR); FLOQUET, Frédéric, 86270 Coussay-les-Bois (FR); PILARD, Pierre, 86220 Saint Remy sur Creuse (FR)
(74) Mandataire: Callu Danseux, Violaine
(86) Numéro de dépôt international: PCT/EP2013/055682
(87) Numéro de publication internationale: WO 2013/139785

(56) Documents cités:
- US-A- 4 663 575
- US-A- 5 506 483
- US-A- 5 857 060

## Description

Procédé et dispositif de commande d'un moteur d'essuie-glaces de véhicule automobile.

L'invention concerne un procédé et un dispositif de commande d'un moteur d'essuie-glaces de véhicule automobile permettant, notamment, de réduire le bruit de compatibilité électromagnétique, désigné bruit EMC en anglais pour Électro Magnetic Compatibility.

Les moteurs d'essuie-glaces des véhicules automobiles actuels sont encore, pour la plupart, des moteurs à courant continu alimentés par une tension d'alimentation continue, issue de la batterie du véhicule, pour les véhicules les plus anciens. La commutation des balais sur les secteurs du collecteur et la commutation mécanique en va et vient du balayage essuie-glaces engendrent des parasites de commutation. Ces parasites de commutation constituent des bruits d'interférences EMC, particulièrement préjudiciables non seulement à la réception et à l'audition des émissions radiophoniques à bord du véhicule, notamment en modulation d'amplitude sinon en modulation de fréquence, mais également au bon fonctionnement des circuits électroniques toujours plus présents dans les véhicules automobiles actuels.

Pour pallier un tel inconvénient, notamment dans la construction des véhicules automobiles actuels les plus modernes, on a proposé, outre le filtrage analogique des bruits d'interférences EMC, le remplacement de l'alimentation en continu des moteurs d'essuie-glaces et la commutation mécanique en va-et-vient par une alimentation en modulation d'impulsions, désignée PWM pour Pulse Width Modulation en anglais, et la commande électronique du moteur par l'intermédiaire d'un circuit désigné pont en H.

Un tel mode d'alimentation, à partir d'une fréquence d'impulsions fixe comprise par exemple entre 15 kHz et 20 kHz, permet par ajustement du rapport cyclique des impulsions de réguler la vitesse de rotation du moteur d'essuie-glaces, et, finalement, de moduler l'utilisation de l'essuie-glaces et la prestation d'essuyage des glaces, pare-brise du véhicule, en fonction du degré d'humidité, de salissure de ce dernier, soit de paramètres externes au véhicule.

À titre d'exemple non limitatif, pour une fréquence des impulsions modulées prise égale à 20 kHz, un rapport cyclique pris égal à 80 % permet, pour une période des impulsions égale à 50 µs, d'établir une alimentation du moteur d'essuie-glaces à la tension nominale, tension de batterie, pendant une durée de 40 µs et une absence d'alimentation pendant une durée de 10 µs. La période ou la fréquence des impulsions modulées est fixée et différente selon les modèles de véhicules automobiles, selon les constructeurs de ces derniers.

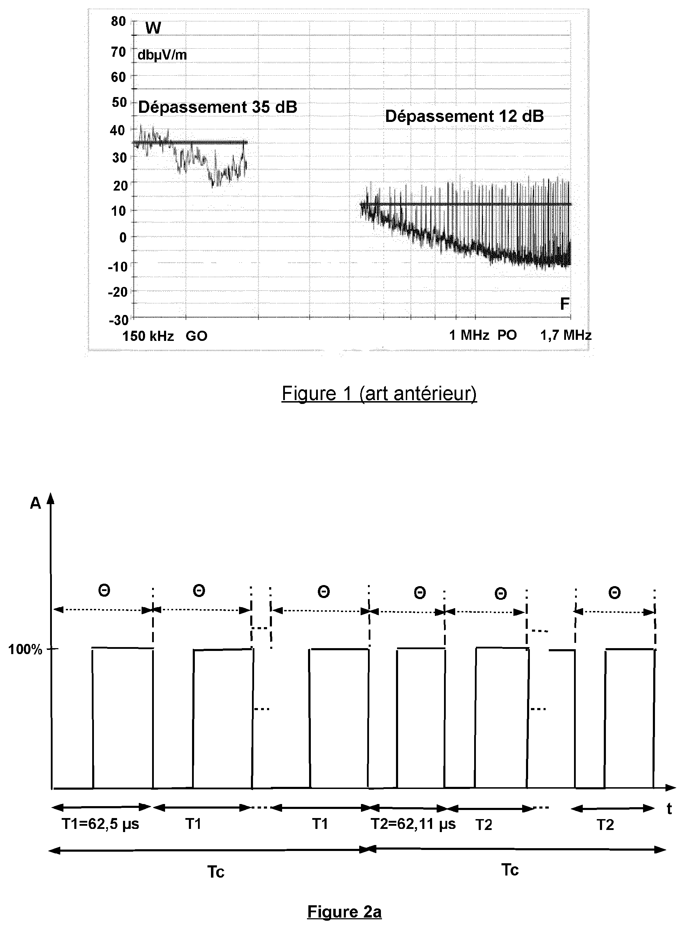

Une telle commutation à fréquence fondamentale fixe, 20kHz par exemple, engendre cependant une émission sensiblement continue de bruit d'interférences EMC dans les bandes de fréquences radio notamment, ainsi que représenté en figure 1, en raison de la génération sensiblement continue de signaux harmoniques ou raies de rang très élevé.

L'amplitude ou le niveau d'énergie W du champ électrique de ces bruits d'interférences, ainsi que représenté sur la figure 1 précitée, est supérieur à 35 dBµV/m dans la bande de fréquences radio en modulation d'amplitude GO (grandes ondes), comprise entre 150 kHz et 280 kHz, et supérieur à 12 dBµV/m dans la bande de fréquences radio en modulation d'amplitude PO (petites ondes), comprise entre 530 kHz et 1,7 MHz.

La génération de tels niveaux de bruit EMC est préjudiciable non seulement à la réception des émissions radio au sein des véhicules actuels, mais également au bon fonctionnement des circuits électroniques et calculateur de bord de ces derniers.

Le document US 4 663 575 A décrit un procédé et un dispositif de commande d'un moteur d'essuie-glaces d'un véhicule automobile selon les préambules des revendications indépendantes.

La présente invention a pour objet la mise en oeuvre d'un procédé et d'un dispositif de commande d'un moteur d'essuie-glaces de véhicule automobile, alimenté et commandé en modulation d'impulsions de rapport cyclique de valeur déterminée permettant un choix sélectif d'une très grande souplesse soit de la période (ou de la fréquence), soit du rapport cyclique des impulsions modulées, ou encore de la période (ou de la fréquence) et du rapport cyclique des impulsions modulées, dans le but d'une utilisation optimale de la fonction essuie-glaces du véhicule, accompagnée d'une réduction sensible du niveau d'émission de bruit électromagnétique engendré par celle-ci.

Un autre objet de la présente invention est, en particulier, la mise en oeuvre d'un procédé et d'un dispositif de commande d'un moteur d'essuie-glaces de véhicule automobile permettant de réduire de manière significative, hors opération de filtrage, le niveau d'émission de bruit électromagnétique de la fonction d'essuie-glaces de tout véhicule automobile dans des bandes de fréquences radio, notamment en modulation d'amplitude et/ou en modulation de fréquence.

Un autre objet de la présente invention est également la mise en oeuvre d'un procédé et d'un dispositif de commande d'un moteur d'essuie-glaces de véhicule automobile permettant non seulement d'obtenir la réduction du niveau d'émission de bruit électromagnétique précitée, mais également d'introduire une grande facilité de paramétrage de programmation de l'utilisation de la fonction essuie-glaces du véhicule, en fonction des paramètres d'environnement extérieur au véhicule, tels que degré d'humidité ou de salissure du pare-brise, température extérieure au véhicule par exemple.

Le procédé de commande d'un moteur d'essuie-glaces de véhicule automobile, alimenté et commandé en modulation d'impulsions de rapport cyclique de valeur déterminée, objet de l'invention, est remarquable en ce qu'il consiste à commuter successivement la période fondamentale instantanée des impulsions modulées entre au moins deux valeurs de période discrètes, le rapport cyclique des impulsions étant sensiblement établi à une valeur déterminée, pour au moins une durée de commutation déterminée des impulsions modulées.

Le procédé, objet de l'invention, est également remarquable en ce que, pour une période fondamentale instantanée et une fréquence fondamentale instantanée correspondante des impulsions modulées, cette fréquence fondamentale instantanée est choisie de façon à minimiser le niveau de bruit électromagnétique engendré par les raies harmoniques de cette fréquence fondamentale instantanée dans une bande de fréquences à protéger de valeur déterminée.

Le procédé, objet de l'invention, est également remarquable en ce que deux fréquences fondamentales instantanées successives des impulsions de modulation de deux durées de commutation successives sont distantes d'un saut de fréquence compris entre une valeur minimale et une valeur maximale de fréquence, les valeurs minimale et maximale de fréquence étant fonction de la bande de fréquences à protéger.

Le procédé, objet de l'invention, est également remarquable en ce que, pour une bande de fréquences à protéger déterminée, la valeur maximale de fréquence bornant le saut de fréquence séparant deux fréquences fondamentales instantanées successives est tel que des fréquences harmoniques des deux fréquences fondamentales instantanées successives sont distinctes et séparées d'une largeur de bande supérieure à une valeur de bande de fréquences de résolution de mesure du bruit électromagnétique.

Le procédé, objet de l'invention, est en outre remarquable en ce que, pour une bande de fréquences à protéger déterminée, la valeur minimale de fréquence séparant deux fréquences fondamentales instantanées successives est telle que la distance entre les raies harmoniques de rang supérieur est sensiblement égale à une valeur de bande de fréquences de résolution de mesure du bruit électromagnétique.

Le procédé, objet de l'invention, est en outre remarquable en ce que la durée de commutation sur au moins deux valeurs de périodes discrètes est inférieure à la durée de mesure du bruit électromagnétique.

Le procédé, objet de l'invention , est en outre remarquable en ce que, pour une pluralité supérieure à deux de valeurs de période discrètes des impulsions modulées, celui-ci consiste à commuter la valeur de la période fondamentale instantanée des impulsions modulées sur l'une des valeurs de période discrètes, sur une suite de durées de commutation successives.

Le procédé, objet de l'invention, est en outre remarquable en ce que la commutation est une commutation cyclique.

Le procédé, objet de l'invention, est également remarquable en ce que la commutation est une commutation pseudo-aléatoire.

Le procédé, objet de l'invention, est enfin remarquable, en ce que celui-ci consiste en outre à sélectionner sur au moins une durée de commutation déterminée la valeur du rapport cyclique des impulsions modulées.

Le dispositif de commande d'un moteur d'essuie-glaces d'un véhicule automobile alimenté et commandé en modulation d'impulsions par l'intermédiaire d'un pont en H, objet de l'invention, est remarquable en ce qu'il comprend au moins :
- des moyens de sélection et de commutation successive de la période fondamentale instantanée des impulsions modulées entre au moins deux valeurs de période discrètes, pour au moins une durée de commutation déterminée ; et,
- des moyens de sélection et de commande de la valeur du rapport cyclique des impulsions modulées pour au moins une durée de commutation des impulsions modulées.

Le dispositif, objet de l'invention, est également remarquable en ce que les moyens de sélection et de commutation successive de la période fondamentale instantanée des impulsions modulées comprennent au moins :
- un circuit d'entrée du choix de la valeur de période, connecté à
- un registre de sélection de la valeur de période fondamentale instantanée des impulsions modulées parmi une pluralité de valeurs de période déterminées, ce registre pilotant le pont en H.

Le dispositif, objet de l'invention, est également remarquable en ce que les moyens de sélection et de commutation du rapport cyclique des impulsions modulées comprennent au moins :
- un circuit d'entrée du choix de la valeur du rapport cyclique des impulsions modulées ; et,
- un registre de sélection du rapport cyclique des impulsions modulées parmi une pluralité de valeurs de rapport cyclique déterminé.

Le dispositif, objet de l'invention, est également remarquable en ce qu'il comprend en outre un circuit de discrimination séquentielle d'une valeur de période fondamentale instantanée parmi une pluralité de valeurs de période déterminées.

Le dispositif, objet de l'invention, est enfin remarquable en ce qu'il comporte un circuit de discrimination pseudo-aléatoire d'une valeur de période fondamentale instantanée parmi une pluralité de valeurs de périodes déterminées.

Le procédé et le dispositif de commande d'un moteur d'essuie-glaces de véhicule automobile, objets de la présente invention, seront mieux compris à la lecture de la description et à l'observation des dessins ci-après dans lesquels, outre la figure 1 relative à l'art antérieur:
- la figure 2a représente, à titre illustratif, un chronogramme des signaux de modulation par impulsions d'alimentation d'un moteur d'essuie-glaces de véhicule automobile obtenus grâce à la mise en oeuvre du procédé objet de l'invention, dans un premier mode de mise en oeuvre non limitatif ;
- la figure 2b représente le diagramme fréquentiel du spectre des fréquences émises et d'au moins un de leurs harmoniques de rang élevé, lors de la mise en oeuvre du procédé objet de l'invention tel qu'illustré en figure 2a ;
- la figure 2c représente un chronogramme des signaux de modulation des impulsions d'alimentation d'un moteur d'essuie-glaces de véhicule automobile obtenus grâce à la mise en oeuvre du procédé objet de l'invention, dans un deuxième mode de mise en oeuvre non limitatif ;
- la figure 2d représente un chronogramme des signaux de modulation des impulsions d'alimentation d'un moteur d'essuie-glaces de véhicule automobile obtenus grâce à la mise en oeuvre du procédé objet de l'invention, dans un troisième mode de mise en oeuvre non limitatif ;
- la figure 3 représente un diagramme comparatif, vis-à-vis de la figure 1, du spectre de fréquences des émissions de bruit EMC obtenu pour des bandes de fréquences radio grandes ondes et petites ondes, grâce à la mise en oeuvre du procédé objet de l'invention tel qu'illustré en figure 2a ;
- la figure 4a représente, à titre illustratif, un schéma fonctionnel d'un dispositif de commande de moteur d'essuie-glaces de véhicule automobile objet de l'invention ;
- la figure 4b représente un chronogramme de signaux successifs mis en oeuvre par le dispositif objet de l'invention, lors de l'exécution d'une commutation séquentielle cyclique des valeurs de période ou de fréquences des impulsions modulées ;
- la figure 4c représente un organigramme non limitatif permettant une exécution d'une commutation pseudo-aléatoire des valeurs de période de fréquences des impulsions de modulation.

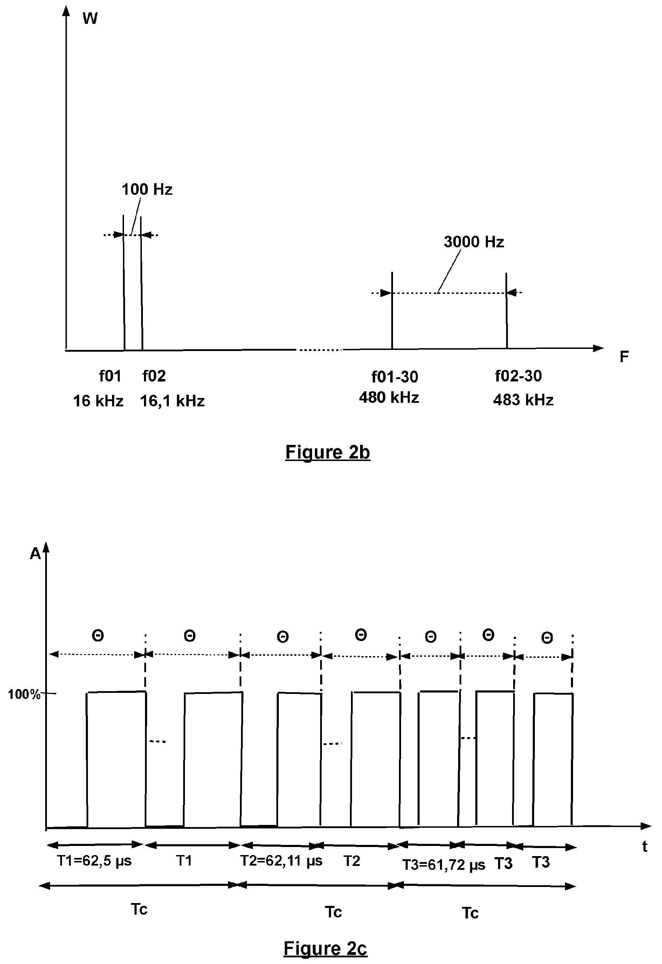

Le procédé de commande d'un moteur d'essuie-glaces de véhicule automobile, conforme à l'objet de l'invention, est maintenant décrit en référence aux figures 2a, 2b et aux figures suivantes.

En référence à la figure 2a, le procédé objet de l'invention permet la commande d'un moteur d'essuie-glaces véhicule automobile alimenté et commandé en modulation d'impulsions de rapport cyclique Θ de valeur déterminée. Sur la figure précitée, l'axe des abscisses est gradué en temps ,t, et l'axe des ordonnées en amplitude A c'est-à-dire en valeur relative de tension des impulsions modulées.

Selon un aspect remarquable du procédé objet de l'invention, celui-ci consiste à commuter successivement la période fondamentale instantanée des impulsions modulées entre au moins deux valeurs de période discrètes, notées T1 et T2 sur la figure précitée. D'une manière générale, on indique que le nombre de valeurs de périodes discrètes n'est pas limité à deux, la commutation successive pouvant intervenir de manière avantageuse à partir d'un nombre quelconque de valeurs de période discrètes, ainsi qu'il sera décrit ultérieurement dans la description.

De manière plus spécifique, on indique que l'opération de commutation intervient pour un rapport cyclique des impulsions sensiblement établi à une valeur déterminée, la valeur Θ mentionnée précédemment, correspondant à une fonction d'essuyage spécifique déterminée en fonction des conditions extérieures au véhicule.

Selon une caractéristique remarquable du procédé objet de l'invention, la commutation précitée intervient pour au moins une durée de commutation déterminée, notée Tc, des impulsions modulées.

À l'observation de la figure 2a, on comprend, à titre d'exemple non limitatif, que la première période fondamentale instantanée de valeur T1 = 62,5 µs est maintenue pendant la durée de commutation Tc, que la commutation avec sélection de la deuxième période de valeur T2 = 62,11 µs intervient, suite à la commutation précitée, après la durée de commutation Tc, et est maintenue sensiblement pendant la même durée de commutation Tc, et ainsi de suite en alternance, pour les valeurs de période T1 etT2 précitées, la valeur du rapport cyclique Θ étant maintenue pendant ces commutations.

Le mode opératoire précité, du fait de la commutation des valeurs de période fondamentale instantanée des impulsions modulées, permet de diversifier les raies d'émission de fréquences harmoniques des fréquences fondamentales engendrées par la modulation des impulsions aux fréquences fondamentales f01 et f02 de modulation des impulsions modulées aux périodes T1 etT2, vis à vis d' une modulation des impulsions à une fréquence fondamentale instantanée unique de la modulation des impulsions modulées à une valeur de période unique donnée de l'art antérieur. On comprend, en particulier, que, du fait de la diversification des raies d'émission précitées, le procédé, objet de l'invention, permet de réduire de manière significative le niveau global d'énergie des bruits d'interférences EMC dans une bande de fréquences radio déterminée à protéger, par exemple.

D'une manière générale, dans la présente description on parlera indifféremment soit de la période fondamentale, soit de la fréquence fondamentale des impulsions modulées, ces deux notions étant équivalentes, la notion de période fondamentale des impulsions modulées étant plus particulièrement réservée à la description de la signature du signal de commande ou des impulsions modulées, telles que représentées en figure 2a par exemple, et la notion de fréquence fondamentale étant plus particulièrement réservée à chaque fréquence fondamentale et aux raies harmoniques de ces dernières engendrées du fait de la modulation des impulsions modulées à la valeur de période fondamentale correspondante.

La figure 2b représente, à titre illustratif, le spectre des fréquences des impulsions modulées à la première valeur de période fondamentale instantanée T1 respectivement à la deuxième valeur de période fondamentale instantanée T2, l'axe des abscisses de la figure 2b étant gradué en valeur de fréquences mesurées en kHz et l'axe des ordonnées en valeur d'énergie W.

En référence à la figure 2b, on indique que la fréquence fondamentale instantanée des impulsions modulées à la première valeur de période T1=62,5 µs correspond à une fréquence fondamentale f01=16 kHz et que la fréquence instantanée des impulsions modulées à la deuxième valeur de période T2= 62,11 µs correspond à une fréquence fondamentale f02 = 16,1 kHz et que les raies harmoniques de rang 30 de ces dernières ont pour valeur f01-30 = 480 kHz et f02-30 = 483 kHz respectivement, ces deux raies harmoniques étant distantes de 3000 Hz.

On comprend ainsi que, pour une période fondamentale instantanée T1,T2 et une fréquence fondamentale instantanée correspondante f01,f02 des impulsions modulées, ces fréquences fondamentales instantanées correspondantes f01,f02 sont choisies de façon à minimiser le niveau de bruit électromagnétique engendré par les raies harmoniques de ces fréquences fondamentales instantanées, dans une bande de fréquences à protéger de valeur déterminée.

A l'observation de la figure 2b on comprend que l'espacement des raies harmoniques f01-30 et f02-30, au minimum égal à 3000Hz au voisinage de la borne inférieure de la bande de fréquences des petites ondes PO à protéger, permet, pour toute raie harmonique de rang supérieur à 30, de réduire la densité d'énergie parasite engendrée par ces raies harmoniques dans la bande de fréquences à protéger précitée.

Ainsi, deux fréquences fondamentales instantanées successives f01 et f02 de modulation des impulsions de modulation sur deux durées de commutation successives Tc sont distantes d'un saut de fréquence, 100 Hz, dans l'exemple des figures 2a et 2b, ce saut de fréquence étant compris entre une valeur minimale et une valeur maximale de fréquences, ces valeurs minimales et maximales étant fonction de la bande de fréquences à protéger.

De manière plus spécifique, on indique que la valeur maximale de fréquence bornant le saut de fréquences séparant deux fréquences fondamentales instantanées successives est telle que les fréquences harmoniques des deux fréquences fondamentales instantanées successives sont distinctes et séparées d'une largeur de bande supérieure à une valeur de bande de fréquences de résolution de mesure du bruit électromagnétique EMC, dans la bande de fréquences à protéger.

En référence à l'exemple des figures 2a et 2b, on constate que la distance entre raies harmoniques, pour la bande de fréquences à protéger en petites ondes PO comprise entre 530 kHz et 1,7 MHz, distance supérieure à 3000 Hz, est supérieure à la bande de fréquences de résolution de mesure du bruit électromagnétique ,RBW, prise égale à 1000 Hz.

En outre, la valeur minimale de fréquences séparant deux fréquences fondamentales instantanées successives est telle que la distance entre les raies harmoniques de rang supérieur est sensiblement égale à une valeur de bande de fréquences de résolution de mesure du bruit électromagnétique EMC.

La mesure du bruit pour chaque point de mesure de la bande de fréquences à protéger est effectuée par balayage sur un temps de balayage de mesure pris égal à 20 ms pour différents points de valeurs de fréquences de valeur déterminée.

Enfin, chaque durée de commutation Tc est inférieure au temps de balayage de mesure, pris égal à 20 ms, chaque durée de commutation Tc pouvant, par exemple, être prise égale à 10 ms. Ainsi, la durée de commutation Tc pour au moins deux valeurs de période discrètes T1,T2 est inférieure à la durée de mesure du bruit électromagnétique.

Le procédé, objet de l'invention, n'est pas limité à la commutation de la période fondamentale des impulsions modulées entre deux valeurs de période discrètes. Ainsi, en référence à la figure 2c, un nombre de valeurs de période discrètes pris égal à 3 ou même supérieur peut être mis en oeuvre.

Dans cette hypothèse, la valeur des périodes T1 et T2, telle qu'indiquée en référence avec la figure 2a, peut être maintenue, la valeur de la période T3 pouvant, par exemple, être prise égale à 61,72 µs, de façon à engendrer des raies harmoniques de rang supérieur distantes d'une valeur supérieure à 3000 Hz dans la bande de fréquences à protéger.

D'une manière plus spécifique, on indique que la durée de commutation Tc peut être prise égale à 10 ms et peut correspondre, avantageusement, à un nombre entier de valeurs de la période sélectionnée. Cette mesure est obtenue par synchronisation de la durée de commutation Tc et des impulsions modulées et permet d'obtenir des transitions synchrones des durées de commutation et des impulsions modulées.

Ainsi, le procédé objet de l'invention peut être mis en oeuvre pour une pluralité d'un nombre N de valeurs de période discrètes des impulsions modulées. Dans cette hypothèse, il consiste à commuter la valeur de la période fondamentale instantanée des impulsions modulées sur l'une des valeurs de période discrètes, pour une suite de durées de commutation successives.

L'exécution de la commutation proprement dite des valeurs de période discrètes peut-être exécutée selon une commutation cyclique. Dans cette hypothèse, les raies harmoniques de chaque fréquence fondamentale instantanée permettent de réduire la densité d'énergie des raies harmoniques et donc du niveau global de bruit EMC correspondant sur la bande de fréquences à protéger. Toutefois, le processus de commutation cyclique est susceptible d'introduire une répétition des niveaux de bruit correspondant aux raies harmoniques précitées.

Selon un mode de mise en oeuvre avantageux non limitatif, l'exécution de la commutation proprement dite des valeurs de période discrète peut, au contraire, être exécutée selon une commutation pseudo-aléatoire. Un tel processus peut être mis en oeuvre par sélection pseudo-aléatoire de la période des impulsions modulées, parmi la pluralité des N valeurs de période discrètes précédemment citées. Un tel mode opératoire permet de s'affranchir sensiblement du risque de répétition du niveau de bruit précédemment cité, et, en définitive d'optimiser la réduction globale du niveau d'émission du bruit EMC finalement engendré sur la bande de fréquences à protéger. Un tel mode opératoire sera décrit plus en détail ultérieurement dans la description.

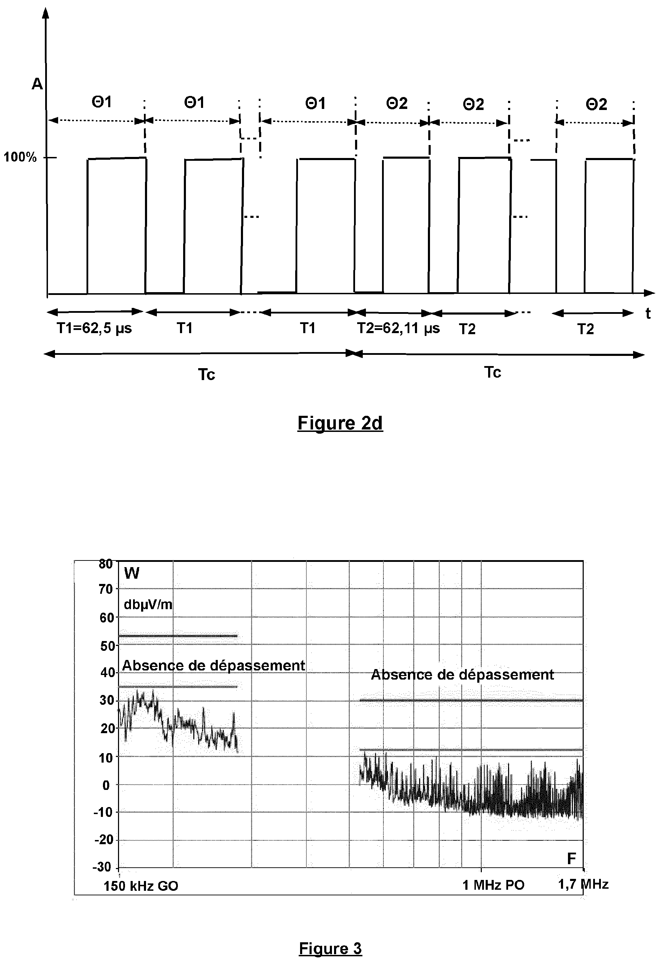

Selon un autre aspect particulièrement remarquable du procédé objet de la présente invention, ainsi que représenté en relation avec la figure 2d, celui-ci consiste en outre, de manière particulièrement avantageuse, à sélectionner pour au moins une durée de commutation Tc, la valeur du rapport cyclique Θ des impulsions modulées. On comprend bien entendu qu'un tel mode opératoire est possible car, pour la mise en oeuvre du procédé objet de l'invention, les variables de période et de rapport cyclique des impulsions modulées sont prises comme variables indépendantes.

On comprend alors que le choix de la valeur du rapport cyclique Θ pour au moins une durée de commutation Tc peut-être maintenu pendant une succession de durées de commutation, pour exécuter une fonction d'essuyage spécifique du pare-brise du véhicule par exemple, en fonction des conditions externes à ce dernier, telles que degré d'humidité ou de salissure, efficacité du balayage de la fonction essuie-glaces par exemple.

Le mode opératoire consistant à sélectionner pour au moins une durée de commutation déterminée la valeur du rapport cyclique des impulsions modulées est représenté sur la figure 2d pour les deux valeurs de période discrètes T1 et T2 de la figure 2a de manière non limitative, le choix et la commutation de la valeur du rapport cyclique correspondant arbitrairement à la commutation des valeurs de période T1 et T2. Un tel mode opératoire n'est pas indispensable et il est bien entendu possible d'affecter soit la valeur du rapport cyclique sélectionné pour une pluralité de durées de commutation Tc, soit, réciproquement la valeur de la période des impulsions modulées pour une pluralité distincte de durées de commutation Tc, les commutations de la période fondamentale instantanée et des valeurs de rapport cyclique étant temporellement décalées d'un nombre entier de valeurs de périodes fondamentales instantanées distinctes, par exemple.

Sur la figure 3, on a représenté un diagramme comparatif, vis-à-vis de la figure 1, du spectre de fréquences de bruit obtenu en présence de la mise en oeuvre du procédé objet de l'invention, pour la bande de fréquences à protéger correspondant aux grandes ondes , GO, respectivement pour la bande de fréquences à protéger correspondant aux petites ondes, PO. De même que dans le cas de la figure 1, sur la figure 3 l'axe des abscisses est gradué en fréquences, selon une échelle logarithmique représentée entre 150 kHz et 1,7 MHz, et l'axe des ordonnées est gradué en énergie des raies harmoniques, mesurée en valeur relative d'atténuation du champ électrique de ces dernières en dBµV/m. La comparaison des diagrammes de spectre de fréquences des figures 1 et 3 montre, grâce à la mise en oeuvre du procédé objet de l'invention, l'absence de dépassement du niveau 35 dB des raies harmoniques constitutives du bruit EMC pour la bande de fréquences des grandes ondes GO et l'absence de dépassement du niveau 12 dB des raies des harmoniques constitutives du bruit EMC pour la bande de fréquences des petites ondes PO.

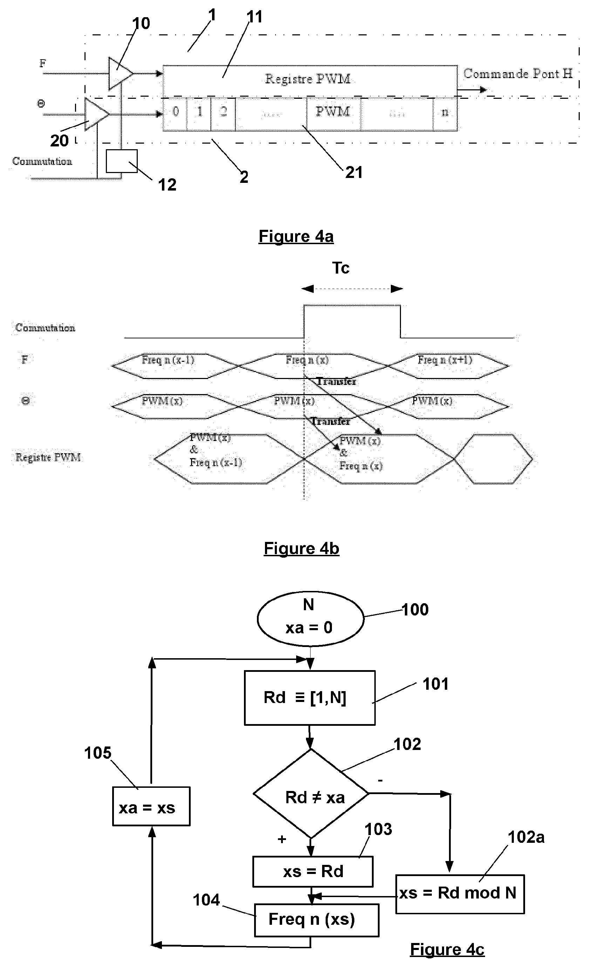

Le dispositif de commande de moteur d'essuie-glaces de véhicule automobile alimenté et commandé en modulation d'impulsions par l'intermédiaire d'un pont en H, conforme à l'objet de la présente invention est maintenant décrit en liaison avec la figure 4a et les figures suivantes.

En référence à la figure 4a précitée, on indique que le dispositif objet de l'invention comprend au moins un module 1 de sélection et de commutation successive de la période des impulsions modulées entre au moins deux valeurs de période discrètes pour au moins une durée de commutation Tc de valeur déterminée, et un module 2 de sélection de commande de la valeur du rapport cyclique Θ des impulsions modulées, pour au moins une durée de commutation Tc des impulsions modulées.

À titre d'exemple non limitatif, on indique que le module 1 de sélection et de commutation successive de la période des impulsions modulées et le module 2 de sélection de commande de la valeur du rapport cyclique Θ des impulsions modulées peuvent avantageusement être constitués chacun par un registre à décalage comportant des valeurs de période discrètes respectivement de rapport cyclique, ou des index d'appel de ces valeurs, ainsi qu'il sera décrit ci-après dans la description.

En outre, à l'observation de la figure 4a, on note que le module 1 de sélection et de commutation successive de la période des impulsions modulées comprend au moins un circuit 10 d'entrée du choix de la valeur de période connecté à un registre 11 de sélection de la valeur de la période fondamentale instantanée des impulsions modulées, parmi une pluralité de valeurs de période déterminées. De même, le module 2 de sélection et de commutation du rapport cyclique des impulsions modulées comprend au moins un circuit d'entrée 20 du choix de la valeur du rapport cyclique Θ des impulsions modulées et un registre 21 de sélection du rapport cyclique des impulsions modulées parmi une pluralité de valeurs de rapport cyclique déterminées. On comprend bien sûr que les registres 11 et 21 sont constitués avantageusement par les registres à décalage précités par exemple.

D'une manière plus particulière, on indique en outre que le dispositif objet de l'invention comporte un circuit 12 de discrimination de la période fondamentale instantanée respectivement du rapport cyclique à appliquer pour une ou plusieurs durées de commutation Tc. On comprend, en particulier, que la commande de commutation peut comporter avantageusement deux commandes séparées, l'une exécutant la commande de sélection de la période discrète pour la durée de commutation Tc et l'autre exécutant la commande de sélection de la valeur du rapport cyclique Θ appliqué aux impulsions modulées, pendant une ou plusieurs durées Tc correspondantes.

Le circuit 12 de discrimination permet par exemple d'effectuer la discrimination par conversion série parallèle des signaux de commande précités.

À titre d'exemple non limitatif, on indique que le circuit 12 de discrimination constitue un circuit de discrimination séquentielle d'une valeur de période parmi une pluralité de valeurs de période déterminées. On comprend, en particulier, que dans une telle hypothèse le circuit 12 commande le circuit d'entrée 10 et exécute en fait la lecture de la valeur de la période fondamentale instantanée ou d'un index d'appel de cette dernière dans le registre à décalage 11.

De la même manière, on indique que le circuit 12 constitue par exemple un circuit de discrimination séquentielle d'une valeur de rapport cyclique parmi une pluralité de valeurs de rapport cyclique, par l'intermédiaire du circuit d'entrée 20, et exécute en fait la lecture séquentielle de la valeur du rapport cyclique sélectionné ou d'un index appel de cette dernière dans le registre à décalage 21.

La figure 4b représente le séquencement des signaux mis en oeuvre par le dispositif objet de l'invention, tel que représenté en figure 4a, sur la durée de commutation Tc. Les valeurs de la période fondamentale instantanée et du rapport cyclique permettent en sortie des registres 11 et 21 la commande directe du pont en H.

Dans un mode de mise en oeuvre spécifique ayant pour objet de supprimer le risque de génération de bruit EMC à structure périodique, sur la bande de fréquences à protéger, le circuit 12 de discrimination peut-être constitué selon un circuit de discrimination pseudo-aléatoire d'une valeur de période fondamentale instantanée parmi la pluralité de valeurs de période déterminées.

Dans ce but, le circuit 12 peut avantageusement être équipé d'un micro programme ou d'un circuit microprogrammé exécutant les opérations illustrées en figure 4c et comportant, par exemple, suite à une étape d'initialisation 100 comportant le nombre N de valeurs de période disponibles de la pluralité de valeurs de période et d'une valeur d'index xa initialisée à une valeur arbitraire , la valeur zéro, xa = 0, une étape 101 de tirage d'une valeur aléatoire Rd comprise dans l'intervalle fermé des valeurs [1,N], une étape de test 102 de comparaison de non égalité de la valeur aléatoire tirée Rd à la valeur de l'index initialisée xa. Sur réponse positive au test 102, à une valeur d'index suivant xs est affectée, à l'étape 103 la valeur aléatoire tirée, xs = Rd, et, à l'étape 104, la valeur de fréquence c'est-à-dire de période discrète correspondant à l'index de valeur xs est appelée par lecture à partir du registre à décalage 11. Au contraire, sur réponse négative au test 102, une étape 102a est appelée, permettant de remplacer la valeur aléatoire tirée par une valeur en correspondance biunivoque de cette dernière. À titre d'exemple non limitatif, à l'étape 102a, on affecte, par exemple, à la valeur d'index suivant xs la valeur du reste de la division de la valeur aléatoire tirée Rd par le nombre N, xs = Rd mod N. L'étape 102a est suivie d'un retour à l'étape 104 d'appel de la fréquence, soit de la période fondamentale instantanée à partir de la valeur d'index suivant xs correspondante. Ceci permet de supprimer le risque d'appel de deux valeurs de période fondamentale instantanées identiques, sur plusieurs durées de commutation Tc successives.

L'étape 104 est elle-même suivie d'une étape de réinitialisation 105 de la valeur d'index xa à la valeur d'index suivant xs, selon la relation xa = xs, puis d'un retour à l'étape 101 pour poursuite du processus sur toute suite adaptée de durées de commutation Tc successives. L'exécution du micro programme dont l'organigramme est représenté en figure 4c est avantageusement synchronisée sur la durée de commutation Tc.

On a ainsi décrit un procédé et un dispositif de commande d'un moteur d'essuie-glaces de véhicule automobile d'une grande souplesse d'utilisation, en raison du paramétrage des variables de période fondamentale et de rapport cyclique des impulsions modulées, permettant en outre une réduction significative du niveau de bruit d'émission sur une pluralité de bandes de fréquences à protéger. En particulier, ces dernières ne sont pas limitées aux bandes de fréquences radio en grandes ondes et en petites ondes, le procédé et le dispositif de commande objets de l'invention pouvant couvrir des bandes de fréquences à protéger, notamment en modulation de fréquences, dans une plage de fréquences comprise entre 10 Hz et 3 GHz.

## Revendications

1. Procédé de commande d'un moteur d'essuie-glaces de véhicule automobile, alimenté et commandé en modulation d'impulsions de rapport cyclique de valeur déterminée, **caractérisé en ce qu'**il consiste à commuter successivement la période fondamentale instantanée des impulsions modulées entre au moins deux valeurs de période discrètes, le rapport cyclique des impulsions étant sensiblement établi à une valeur déterminée, pour au moins une durée de commutation déterminée des impulsions modulées.

2. Procédé selon la revendication 1, **caractérisé en ce que** pour une période fondamentale instantanée et une fréquence fondamentale instantanée correspondante desdites impulsions modulées, ladite fréquence fondamentale instantanée est choisie de façon à minimiser le niveau de bruit électromagnétique engendré par les raies harmoniques de ladite fréquence fondamentale instantanée dans une bande de fréquences à protéger de valeur déterminée.

3. Procédé selon la revendication 2, **caractérisé en ce que** deux fréquences fondamentales instantanées successives des impulsions de modulation de deux durées de commutation successives sont distantes d'un saut de fréquence compris entre une valeur minimale et une valeur maximale de fréquence, lesdites valeurs minimale et maximale de fréquence étant fonction de la bande de fréquences à protéger.

4. Procédé selon la revendication 3, **caractérisé en ce que**, pour une bande de fréquences à protéger déterminée, la valeur maximale de fréquence bornant le saut de fréquence séparant deux fréquences fondamentales instantanées successives est tel que les fréquences harmoniques des deux fréquences fondamentales instantanées successives sont distinctes et séparées d'une largeur de bande supérieure à une valeur de bande de fréquences de résolution de mesure du bruit électromagnétique.

5. Procédé selon la revendication 3 ou 4, **caractérisé en ce que** pour une bande de fréquences à protéger déterminée, la valeur minimale de fréquence séparant deux fréquences fondamentales instantanées successives est telle que la distance entre les raies harmoniques de rang supérieur est sensiblement égale à une valeur de bande de fréquences de résolution de mesure du bruit électromagnétique.

6. Procédé selon l'une des revendications 4 ou 5, **caractérisé en ce que** la durée de commutation entre au moins deux valeurs de période discrètes est inférieure à la durée de mesure du bruit électromagnétique.

7. Procédé selon l'une des revendications 1 à 6, **caractérisé en ce que** pour une pluralité supérieure à deux de valeurs de période discrètes desdites impulsions modulées, celui-ci consiste à commuter la valeur de la période fondamentale des impulsions modulées sur l'une des valeurs de période discrètes, pour une suite de durées de commutation successives.

8. Procédé selon la revendication 7, **caractérisé en ce que** ladite commutation est une commutation cyclique.

9. Procédé selon la revendication 7 ou 8, **caractérisé en ce que** ladite commutation est une commutation pseudo-aléatoire.

10. Procédé selon l'une des revendications 1 à 9, **caractérisé en ce que** celui-ci consiste en outre à sélectionner pour au moins une durée de commutation déterminée la valeur du rapport cyclique desdites impulsions modulées.

11. Dispositif de commande d'un moteur d'essuie-glaces d'un véhicule automobile alimenté et commandé en modulation d'impulsions par l'intermédiaire d'un pont en H, **caractérisé en ce qu'**il comprend au moins :
- des moyens (1) de sélection et de commutation successive de la période fondamentale instantanée des impulsions modulées entre au moins deux valeurs de périodes discrètes, pour au moins une durée de commutation déterminée ; et,
- des moyens (2) de sélection et de commande de la valeur du rapport cyclique desdites impulsions modulée pour au moins une durée de commutation des impulsions modulées.

12. Dispositif selon la revendication 11, **caractérisé en ce que** lesdits moyens (1) de sélection et de commutation successive de la période fondamentale instantanée des impulsions modulées comprennent au moins :
- un circuit (10) d'entrée du choix de la valeur de période, connecté à
- un registre (11) de sélection de la valeur de période fondamentale instantanée des impulsions modulées, parmi une pluralité de valeurs de période déterminées, ledit registre pilotant ledit pont en H.

13. Dispositif selon la revendication 11 ou 12, **caractérisé en ce que** lesdits moyens (2) de sélection et de commutation du rapport cyclique des impulsions modulées comprennent au moins :
- un circuit d'entrée (20) du choix de la valeur du rapport cyclique des impulsions modulées ; et,
- un registre (21) de sélection du rapport cyclique des impulsions modulées parmi une pluralité de valeurs de rapport cyclique déterminées.

14. Dispositif selon l'une des revendications 11 à 13, **caractérisé en ce qu'**il comprend en outre un circuit (12) de discrimination séquentielle d'une valeur de période parmi une pluralité de valeurs de périodes déterminées.

15. Dispositif selon l'une des revendications 11 à 13, **caractérisé en ce qu'**il comporte un circuit (12) de discrimination pseudo-aléatoire d'une valeur de période parmi une pluralité de valeurs de périodes déterminées.

## Patentansprüche

1. Verfahren zur Steuerung eines Scheibenwischermotors eines Kraftfahrzeugs, der in Pulsmodulation mit einem Tastverhältnis eines bestimmten Werts gespeist und gesteuert wird, **dadurch gekennzeichnet, dass** es darin besteht, die augenblickliche Grundperiode der modulierten Pulse nacheinander zwischen mindestens zwei unterschiedlichen Periodenwerten umzuschalten, wobei das Tastverhältnis der Pulse für mindestens eine bestimmte Umschaltdauer der modulierten Pulse im Wesentlichen auf einem bestimmten Wert festgelegt wird.

2. Verfahren nach Anspruch 1, **dadurch gekennzeichnet, dass** für eine augenblickliche Grundperiode und eine entsprechende augenblickliche Grundfrequenz der modulierten Pulse die augenblickliche Grundfrequenz so gewählt wird, dass der von den harmonischen Oberschwingungen der augenblicklichen Grundfrequenz in einem zu schützenden Frequenzband bestimmten Werts erzeugte elektromagnetische Rauschpegel minimiert wird.

3. Verfahren nach Anspruch 2, **dadurch gekennzeichnet, dass** zwei aufeinanderfolgende augenblickliche Grundfrequenzen der Modulationspulse von zwei aufeinanderfolgenden Umschaltdauern um einen Frequenzsprung beabstandet sind, der zwischen einem Minimalwert und einem Maximalwert der Frequenz liegt, wobei der Minimal- und der Maximalwert vom zu schützenden Frequenzband abhängen.

4. Verfahren nach Anspruch 3, **dadurch gekennzeichnet, dass** für ein bestimmtes zu schützendes Frequenzband der Maximalwert der Frequenz, der den zwei aufeinanderfolgende augenblickliche Grundfrequenzen trennenden Frequenzsprung eingrenzt, so ist, dass die Oberschwingungsfrequenzen der zwei aufeinanderfolgenden augenblicklichen Grundfrequenzen unterschiedlich und durch eine Bandbreite getrennt sind, die größer ist als ein Messauflösung-Frequenzbandwert des elektromagnetischen Rauschens.

5. Verfahren nach Anspruch 3 oder 4, **dadurch gekennzeichnet, dass** für ein bestimmtes zu schützendes Frequenzband der zwei aufeinanderfolgende augenblickliche Grundfrequenzen trennende Frequenz-Minimalwert so ist, dass der Abstand zwischen den harmonischen Oberschwingungen höheren Rangs im Wesentlichen gleich einem Messauflösung-Frequenzbandwert des elektromagnetischen Rauschens ist.

6. Verfahren nach einem der Ansprüche 4 oder 5, **dadurch gekennzeichnet, dass** die Umschaltdauer zwischen mindestens zwei unterschiedlichen Periodenwerten geringer als die Messdauer des elektromagnetischen Rauschens ist.

7. Verfahren nach einem der Ansprüche 1 bis 6, **dadurch gekennzeichnet, dass** es für eine Vielzahl größer als zwei von unterschiedlichen Periodenwerten der modulierten Pulse darin besteht, den Wert der Grundperiode der modulierten Pulse für eine Folge von aufeinanderfolgenden Umschaltdauern auf einen der unterschiedlichen Periodenwerte umzuschalten.

8. Verfahren nach Anspruch 7, **dadurch gekennzeichnet, dass** die Umschaltung eine zyklische Umschaltung ist.

9. Verfahren nach Anspruch 7 oder 8, **dadurch gekennzeichnet, dass** die Umschaltung eine pseudozufällige Umschaltung ist.

10. Verfahren nach einem der Ansprüche 1 bis 9, **dadurch gekennzeichnet, dass** es außerdem darin besteht, den Wert des Tastverhältnisses der modulierten Pulse für mindestens eine bestimmte Umschaltdauer auszuwählen.

11. Steuervorrichtung eines Scheibenwischermotors eines Kraftfahrzeugs, der mittels einer H-Brücke in Pulsmodulation gespeist und gesteuert wird, **dadurch gekennzeichnet, dass** sie mindestens enthält:
- Einrichtungen (1) zur Auswahl und aufeinanderfolgenden Umschaltung der augenblicklichen Grundperiode der modulierten Pulse zwischen mindestens zwei unterschiedlichen Periodenwerten, für mindestens eine bestimmte Umschaltdauer; und
- Einrichtungen (2) zur Auswahl und Steuerung des Werts des Tastverhältnisses der modulierten Pulse für mindestens eine Umschaltdauer der modulierten Pulse.

12. Vorrichtung nach Anspruch 11, **dadurch gekennzeichnet, dass** die Einrichtungen (1) zur Auswahl und folgenden Umschaltung der augenblicklichen Grundperiode der modulierten Pulse mindestens enthalten:
- einen Eingangsschaltkreis (10) der Wahl des Periodenwerts, verbunden mit
- einem Auswahlregister (11) des augenblicklichen Grundperiodenwerts der modulierten Pulse unter einer Vielzahl von bestimmten Periodenwerten, wobei das Register die H-Brücke steuert.

13. Vorrichtung nach Anspruch 11 oder 12, **dadurch gekennzeichnet, dass** die Einrichtungen (2) zur Auswahl und Umschaltung des Tastverhältnisses der modulierten Pulse mindestens enthalten:
- einen Eingangsschaltkreis (20) der Wahl des Werts des Tastverhältnisses der modulierten Pulse; und
- ein Auswahlregister (21) des Tastverhältnisses der modulierten Pulse unter einer Vielzahl von bestimmten Tastverhältniswerten.

14. Vorrichtung nach einem der Ansprüche 11 bis 13, **dadurch gekennzeichnet, dass** sie außerdem einen Schaltkreis (12) zur sequentiellen Unterscheidung eines Periodenwerts unter einer Vielzahl von bestimmten Periodenwerten enthält.

15. Vorrichtung nach einem der Ansprüche 11 bis 13, **dadurch gekennzeichnet, dass** sie einen Schaltkreis (12) zur pseudo-zufälligen Unterscheidung eines Periodenwerts unter einer Vielzahl von bestimmten Periodenwerten enthält.

## Claims

1. Method for controlling a windshield wiper motor of an automobile vehicle, powered and controlled in pulse-width modulation mode with a duty cycle of given value, **characterized in that** it consists in successively switching the instantaneous fundamental period of the modulated pulses between at least two discrete period values, the duty cycle of the pulses being substantially established at a given value, for at least one given switching period of the modulated pulses.

2. Method according to Claim 1, **characterized in that**, for an instantaneous fundamental period and a corresponding instantaneous fundamental frequency of said modulated pulses, said instantaneous fundamental frequency is chosen so as to minimize the level of electromagnetic noise generated by the harmonic lines of said instantaneous fundamental frequency within a band of frequencies to be protected of given value.

3. Method according to Claim 2, **characterized in that** two successive instantaneous fundamental frequencies of the modulation pulses of two successive switching periods are separated by a frequency jump included between a minimum value and a maximum value of frequency, said minimum and maximum values of frequency being a function of the band of frequencies to be protected.

4. Method according to Claim 3, **characterized in that**, for a given band of frequencies to be protected, the maximum value of frequency bounding the frequency jump separating two successive instantaneous fundamental frequencies is such that the harmonic frequencies of the two successive instantaneous fundamental frequencies are distinct and separated by a band width larger than a value of measurement resolution frequency band of the electromagnetic noise.

5. Method according to Claim 3 or 4, **characterized in that** for a given band of frequencies to be protected, the minimum value of frequency separating two successive instantaneous fundamental frequencies is such that the distance between the harmonic lines of higher order is substantially equal to a value of measurement resolution frequency band of the electromagnetic noise.

6. Method according to either of Claims 4 and 5, **characterized in that** the switching period between at least two discrete period values is less than the duration of measurement of the electromagnetic noise.

7. Method according to one of Claims 1 to 6, **characterized in that**, for a plurality greater than two of discrete period values of said modulated pulses, the latter consists in switching the value of the fundamental period of the pulses modulated over one of the discrete period values, for a series of successive switching periods.

8. Method according to Claim 7, **characterized in that** said switching is a cyclic switching.

9. Method according to Claim 7 or 8, **characterized in that** said switching is a pseudo-random switching.

10. Method according to one of Claims 1 to 9, **characterized in that** the latter furthermore consists in selecting, for at least one given switching period, the value of the duty cycle of said modulated pulses.

11. Device for controlling a windshield wiper motor of an automobile vehicle powered and controlled in pulse-width modulation mode by means of an H bridge, **characterized in that** it comprises at least:
- means (1) for selecting and for successive switching of the instantaneous fundamental period of the modulated pulses between at least two discrete period values, for at least one given switching period; and,
- means (2) for selecting and for controlling the duty cycle of said modulated pulses for at least one switching period of the modulated pulses.

12. Device according to Claim 11, **characterized in that** said means (1) for selecting and successive switching of the instantaneous fundamental period of the modulated pulses comprise at least:
- one input circuit (10) for the choice of the period value, connected to
- one register (11) for selecting the value of instantaneous fundamental period of the modulated pulses, from amongst a plurality of given period values, said register controlling said H bridge.

13. Device according to Claim 11 or 12, **characterized in that** said means (2) for selecting and for switching the duty cycle of the modulated pulses comprise at least:
- one input circuit (20) for the choice of the value of the duty cycle of the modulated pulses; and,
- one register (21) for selecting the duty cycle of the modulated pulses from amongst a plurality of given values of duty cycle.

14. Device according to one of Claims 11 to 13, **characterized in that** it furthermore comprises a circuit (12) for sequential discrimination of a period value from amongst a plurality of given period values.

15. Device according to one of Claims 11 to 13, **characterized in that** it comprises a pseudo-random circuit (12) for discrimination of a period value from amongst a plurality of given period values.
